# EUROPÄISCHE PATENTANMELDUNG

(11) **EP 0 844 407 A1**
(43) Veröffentlichungstag der Anmeldung: **27.05.1998**
(21) Anmeldenummer: 97112538.0
(22) Anmeldetag: 22.07.1997
(51) Int. Cl.: F16C 27/06, F16C 33/78

(54) **Dichtungsanordnung für ein Wälzlager**

(30) Priorität: 23.11.1996 DE 19648602
(71) Anmelder: Firma Carl Freudenberg, 69469 Weinheim (DE)
(72) Erfinder: Stadler, Rolf, 64646 Heppenheim (DE)

(57) **Zusammenfassung**

Dichtungsanordnung, umfassend einen in einer Gehäusebohrung (1) angeordneten Radialwellendichtring (2), der eine abzudichtende Welle (3) mit einer Dichtlippe (4) unter radialer Vorspannung dichtend umschließt, wobei die Dichtlippe (4) an einem radial nach innen weisenden ersten Schenkel (5) eines Stützrings (6) aus zähhartem Werkstoff angeordnet ist, wobei der sich in axialer Richtung erstreckende zweite Schenkel (7) radial außenseitig eine Beschichtung (8) aus elastomerem Werkstoff aufweist, die unter radialer Vorspannung an die die Gehäusebohrung (1) begrenzende Wand (9) angelegt ist und wobei in radialer Richtung zwischen dem zweiten Schenkel (7) und der Welle (3) ein Wälzlager (10) angeordnet ist und wobei die Dichtlippe (4) in axialer Richtung auf der dem abzudichtenden Raum (11) zugewandten Seite des Wälzlagers (10) und des ersten Schenkels (5) angeordnet ist. Der zweite Schenkel (7) ist auf der in axialer Richtung (11) abgewandten Stirnseite (12) von der Beschichtung (8) zumindest teilweise umschlossen und mit der Beschichtung schwingungsentkoppelt an einen Längsanschlag (13) der Wandung (9) anlegbar.

## Beschreibung

### Technisches Gebiet

Die Erfindung betrifft eine Dichtungsanordnung, umfassend einen in einer Gehäusebohrung angeordneten Radialwellendichtring, der eine abzudichtende Welle mit einer Dichtlippe unter radialer Vorspannung dichtend umschließt, wobei die Dichtlippe an einem radial nach innen weisenden ersten Schenkel eines Stützrings aus zähhartem Werkstoff angeordnet ist, wobei der sich in axialer Richtung erstreckende zweite Schenkel radial außenseitig eine Beschichtung aus elastomerem Werkstoff aufweist, die unter radialer Vorspannung an die die Gehäusebohrung begrenzende Wandung angelegt ist, wobei in radialer Richtung zwischen dem zweiten Schenkel und der Welle ein Wälzlager angeordnet ist und wobei die Dichtlippe in axialer Richtung auf der dem abzudichtenden Raum zugewandten Seite des Wälzlagers und des ersten Schenkels angeordnet ist.

### Stand der Technik

Eine solche Dichtungsanordnung ist aus dem DE-GM 94 00 766 bekannt. Das Wälzlager ist als Kugellager ausgebildet und umfaßt einen äußeren und einen inneren Laufring, die durch als Wälzkörper ausgebildete Kugeln aufeinander abgestützt sind. Der äußere Laufring besteht aus zwei axial hintereinander angeordneten Ringteilen, die mittels eines eine Vorspannung des Lagers erzeugenden Federelements an die Wälzkörper angedrückt sind. Eine Dichtung dichtet einen durch die Laufringe gebildeten Ringspalt gegenüber der Lagerumgebung ab. Die Dichtung ist an das äußere Laufringteil anvulkanisiert; die Dichtung ist einstückig ineinander übergehend mit dem Wälzlager ausgebildet. Dabei ist allerdings zu beachten, daß das mit der Dichtung kombinierte Wälzlager aus vergleichsweise kompliziert geformten Einzelteilen besteht, was in fertigungstechnischer und wirtschaftlicher Hinsicht wenig zufriedenstellend ist. Ein separates Auswechseln des Lagers und/oder des Dichtrings ist bei der vorbekannten Dichtungsanordnung nicht möglich. Weiterhin ist keine radiale und axiale Schwingungsentkopplung vorhanden.

### Darstellung der Erfindung

Der Erfindung liegt die Aufgabe zugrunde, eine Dichtungsanordnung der eingangs genannten Art derart weiterzuentwickeln, daß eine Schwingungsübertragung von der abzudichtenden Welle über das Wälzlager und den Radialwellendichtring auf das Gehäuse zuverlässig vermieden wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es im Rahmen der vorliegenden Erfindung vorgesehen, daß der zweite Schenke auf der dem abzudichtenden Raum abgewandten Stirnseite von der Beschichtung zumindest teilweise umschlossen ist und mit der Beschichtung schwingungsentkoppelt an einen Längsanschlag der Wandung anlegbar ist. Dadurch, daß der Stützring nur den Außenring des Wälzlagers und folglich an keiner Stelle das Gehäuse anliegend berührt, ist eine Übertragung von Schwingungen von der drehenden Welle über den drehenden Innenring und die drehenden Wälzkörper, den dazu relativ stehenden Außenring und den Stützring auf das Gehäuse ausgeschlossen. Durch die Schwingungsentkopplung wird außerdem eine Reduzierung der betriebsbedingten Geräusche bewirkt.

Der Stützring weist bevorzugt einen im wesentlichen Z-förmigen Querschnitt auf. Durch die einfache Geometrie des Stützrings ist dieser einfach und kostengünstig herstellbar. Bevorzugt besteht der Stützring aus einem spanlos umformbaren metallischen Werkstoff und wird beispielsweise durch Tiefziehen erzeugt.

Die Stirnseite weist bevorzugt einen Radialvorsprung auf, der von der Wandung mit radialem Abstand umschlossen ist, wobei der durch den Abstand gebildete Spalt mit der Beschichtung ausgefüllt ist. Der Radialvorsprung hat die Funktion einer Armierung für die Beschichtung. Außerdem wird dadurch, daß sich der Radialvorsprung parallel zum Längsanschlag des Gehäuses erstreckt, eine verkantungsfreie, verbesserte räumliche Zuordnung der Dichtungsanordnung zum Gehäuse bewirkt.

Der erste Schenkel ist bevorzugt in einem radial inneren ersten Teilbereich entgegen der Richtung des Wälzlagers in Richtung des abzudichtenden Raums gekröpft ausgebildet und dem Innenring des Wälzlagers mit axialem Abstand berührungsfrei benachbart zugeordnet. Der erste Teilhereich schließt mit einer Radialebene bevorzugt einen spitzen Winkel ein, der 2 bis 15° beträgt. Bei einer derartigen Ausgestaltung ist von Vorteil, daß der Einbauraum des Wälzlagers keinen Bestandteil des abzudichtenden Raums bildet und daß das gekapselte Lager daher keinen Differenzdrücken ausgesetzt ist. Außerhalb des abzudichtenden Raums herrscht der gleiche Druck, wie innerhalb des auf Dauer geschmierten Lagers. Durch die Druckentlastung wird ein Verlust des Schmiermittels aus dem Lager vermieden und die Haltbarkeit des Wälzlagers deutlich erhöht. Dadurch, daß der erste Teilbereich in Richtung des abzudichtenden Raums gekröpft ist, wird eine frei Relativbeweglichkeit des Walzlagerinnenrings zum Wälzlageraußenring sichergestellt. Anders als der Außenring des Wälzlagers berührt der Innenring des Wälzlagers mit seiner Stirnseite den entsprechenden Teilbereich des Stützrings nicht.

Die Beschichtung und die Dichtlippe sind bevorzugt materialeinheitlich und einstückig ausgebildet. Der elastomere Werkstoff, aus dem die Dichtlippe und die Beschichtung bestehen, ist dabei sowohl zur dynamischen Abdichtung der rotierenden Welle als auch zur statischen Abdichtung gegenüber dem Gehäuse vorgesehen. Durch die materialeinheitliche und einstückige Ausbildung ist die Herstellung der Dichtungsanordnung in fertigungstechnischer und wirtschaftlicher Hinsicht einfach und kostengünstig durchführbar.

Der erste und der zweite Schenkel sind bevorzugt jeweils nur auf der dem Wälzlager abgewandten Seite mit elastomerem Werkstoff der Beschichtung versehen. Schwingungen, die beispielsweise durch eine Unwucht der Welle hervorgerufen werden, werden durch die radial außenseitig des zweiten Schenkels angeordnete Beschichtung gedämpft. Der Außenring des Wälzlagers berührt den bevorzugt aus einem metallischen Werkstoff bestehenden Stützring radial innenseitig des ersten Schenkels unmittelbar anliegend. Das Wälzlager ist derart in den Stützring eingepreßt, daß die dem abzudichtenden Raum zugewandte Stirnseite den sich in radialer Richtung erstreckenden ersten Schenkel anliegend berührt. Die Positionierung des Wälzlagers innerhalb des Stützrings ist daher besonders einfach. Außerdem weist die vormontierbare Einheit, bestehend aus Radialwellendichtring und Wälzlager nur geringe Abmessungen in axialer Richtung auf.

Die beanspruchte Dichtungsanordnung kann als Lagerhülse zur Aufnahme eines Kurbelwellenlagers einer Verbrennungskraftmaschine verwendet werden. Durch die Verwendung der beanspruchten Dichtungsanordnung als Lagerhülse besteht keine Notwendigkeit, Lagersitze im Kurbelgehäuse der Verbrennungskraftmaschine durch eine spanabhebende Bearbeitung zu erzeugen. In der beanspruchten Dichtungsanordnung ist einerseits ein Wälzlager schwingungsdämpfend aufgenommen und andererseits wird der Wellendurchtritt durch das Gehäuse abgedichtet. Durchmessertoleranzen des zweiten Schenkels, des Stützrings und/oder der Gehäusebohrung werden durch die elastische Beschichtung problemlos ausgeglichen.

### Ausführung der Erfindung

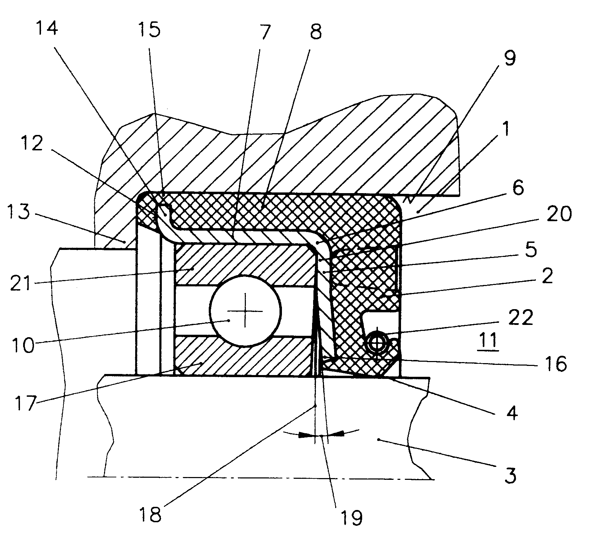

Ein Ausführungsbeispiel der erfindungsgemäßen Dichtungsanordnung wird nachfolgend anhand der Zeichnung näher erläutert.

In der Zeichnung ist ein Ausführungsbeispiel der beanspruchten Dichtungsanordnung gezeigt, die als Lagerhülse zur Aufnahme eines als Kurbelwellenlager ausgebildeten Wälzlagers 10 zur Anwendung gelangt. Der Radialwellendichtring 2 ist in eine Gehäusebohrung 1 eingepreßt, wobei die Gehäusebohrung 1 einen Bestandteil des Kurbelwellengehäuses einer Verbrennungskraftmaschine bildet. Der Radialwellendichtring 2 umschließt eine abzudichtende Welle 3 mit einer dynamisch beanspruchten Dichtlippe 4, wobei die Dichtlippe 4 mit dem radial nach innen weisenden Schenke 5 des Stützrings 6 verbunden ist. Der zweite Schenkel 7 erstreckt sich in axialer Richtung und ist radial außenseitig mit einer Beschichtung 8 aus elastomerem Werkstoff versehen, die als statische Dichtung ausgebildet ist. Die Beschichtung 8 und die Dichtlippe 4 sind einstückig ineinander übergehend ausgebildet und bestehen aus einem übereinstimmenden elastomeren Werkstoff. Die Beschichtung 8 ist radial außenseitig von der die Gehäusebohrung 1 begrenzenden Wandung 9 unter radialer Vorspannung dichtend umschlossen. Außerdem ist die Beschichtung 8 im Bereich der Stirnseite 12 des zweiten Schenkels 7 elastisch vorgespannt. Der zweite Schenkel 7 ist auf der dem abzudichtenden Raum abgewandten Stirnseite 12 von der Beschichtung 8 umschlossen und durch die Beschichtung 8 schwingungsentkoppelt an den Längsanschlag 13 der Wandung 9 angelegt.

Innerhalb des Spalts 15 zwischen der außenumfangsseitigen Begrenzung des Radialvorsprungs 14 und der Wandung 9 ist der Spalt 15 ebenfalls mit der Beschichtung 8 ausgefüllt.

In diesem Ausführungsbeispiel ist das Wälzlager 10 als Rillenkugellager ausgebildet und in den zweiten Schenke 7 eingepreßt. Das Wälzlager 10 und die Dichtung bilden eine vormontierbare Einheit. Die Dichtlippe 4 ist in axialer Richtung auf der dem abzudichtenden Raum 11 zugewandten Seite des Wälzlagers 10 und des ersten Schenkels 5 angeordnet. Um eine gute Relativbeweglichkeit von Innen- 17 und Außenring 21 des Wälzlagers 10 zueinander zu gewährleisten, ist der erste Schenke 5 in zwei einander radial benachbarte Teilbereiche 16, 20 unterteilt, wobei der radial innere erste Teilbereich 16 in Richtung des abzudichtenden Raums 11 verformt ist. Eine Berührung des Innenrings 17 mit dem inneren Teilbereich 16 erfolgt während der bestimmungsgemäßen Verwendung der Dichtungsanordnung nicht. Dadurch ist die relative Verdrehbarkeit des Innenrings 16 bezogen auf den mit dem Stützring 6 verpreßten Außenring 21 des Wälzlagers 10 sichergestellt. Der erste Teilbereich 16 und eine Radialebene 18 schließen einen Winkel 19 ein, der in diesem Ausführungsbeispiel 7° beträgt.

Um unter allen Betriebsbedingungen eine ausreichend große radiale Anpreßung der Dichtlippe 4 an die Oberfläche der abzudichtenden Welle 3 sicherzustellen, ist der Radialwellendichtring 2 mit einer Ringwendelfeder 22 versehen.

Die Beschichtung 8 kann radial außenseitig mit einer sich in axialer Richtung erstreckenden Wellung versehen sein, um die statische Abdichtung und den Sitz der Dichtungsanordnung sowie die Montierbarkeit in der Gehäusebohrung 1 weiter zu verbessern.

Dadurch, daß der Stützring 6 im eingebauten Zustand die Wandung 9 der Gehäusebohrung 1 an keiner Stelle anliegend berührt, sondern dieser durch die Beschichtung 8 schwingungsentkoppelt zugeordnet ist, werden die betriebsbedingten Geräusche deutlich reduziert.

## Patentansprüche

1. Dichtungsanordnung, umfassend einen in einer Gehäusebohrung angeordneten Radialwellendichtring, der eine abzudichtende Welle mit einer Dichtlippe unter radialer Vorspannung dichtend umschließt, wobei die Dichtlippe an einem radial nach innen weisenden ersten Schenkel eines Stützrings aus zähhartem Werkstoff angeordnet ist, wobei der sich in axialer Richtung erstreckende zweite Schenkel radial außenseitig eine Beschichtung aus elastomerem Werkstoff aufweist, die unter radialer Vorspannung an die die Gehäusebohrung begrenzende Wandung angelegt ist, wobei in radialer Richtung zwischen dem zweiten Schenkel und der Welle ein Wälzlager angeordnet ist und wobei die Dichtlippe in axialer Richtung auf dem abzudichtenden Raum zugewandten Seite des Wälzlagers und des ersten Schenkels angeordnet ist, **dadurch gekennzeichnet**, daß der zweite Schenkel (7) auf der dem abzudichtenden Raum (11) abgewandten Stirnseite (12) von der Beschichtung (8) zumindest teilweise umschlossen ist und mit der Beschichtung (8) schwingungsentkoppelt an einen Längsanschlag (13) der Wandung (9) anlegbar ist.

2. Dichtungsanordnung nach Anspruch 1, dadurch gekennzeichnet, daß der Stützring (6) einen im wesentlichen Z-förmigen Querschnitt aufweist.

3. Dichtungsanordnung nach einem der Ansprüche 1 bis 2, dadurch gekennzeichnet, daß die Stirnseite (12) einen Radialvorsprung (14) aufweist, der von der Wandung (9) mit radialem Abstand umschlossen ist.

4. Dichtungsanordnung nach Anspruch 3, dadurch gekennzeichnet, daß der durch den Abstand gebildete Spalt (15) mit der Beschichtung (8) ausgefüllt ist.

5. Dichtungsanordnung nach einem der Ansprüche 1 bis 4, dadurch gekennzeichnet, daß der erste Schenkel (5) in einem radial inneren ersten Teilbereich (16) entgegen der Richtung des Wälzlagers (10) in Richtung des abzudichtenden Raums (11) gekröpft ausgebildet ist und dem Innenring (17) des Wälzlagers (10) mit axialem Abstand berührungsfrei benachbart zugeordnet ist.

6. Dichtungsanordnung nach Anspruch 5, dadurch gekennzeichnet, daß der erste Teilbereich (16) mit einer Radialebene (18) einen spitzen Winkel (19) einschließt, der 2 bis 15° beträgt.

7. Dichtungsanordnung nach einem der Ansprüche 1 bis 6, dadurch gekennzeichnet, daß die Beschichtung (8) und die Dichtlippe (4) materialeinheitlich und einstückig ausgebildet sind.

8. Dichtungsanordnung nach einem der Ansprüche 1 bis 7, dadurch gekennzeichnet, daß der erste (5) und der zweite Schenke (7) jeweils nur auf der dem Wälzlager (10) abgewandten Seite mit elastomerem Werkstoff versehen sind.

9. Dichtungsanordnung nach einem der Ansprüche 1 bis 8, dadurch gekennzeichnet, daß der erste (16) und ein sich im wesentlichen in radialer Richtung erstreckender zweiter Teilbereich (20) zwischen dem Innen- (17) und dem Außenring (21) des Wälzlagers (10) ineinander übergehend ausgebildet sind.
